# EUROPÄISCHE PATENTSCHRIFT

(11) **EP 1 614 480 B1**
(45) Veröffentlichungstag und Bekanntmachung des Hinweises auf die Patenterteilung: **26.03.2008**
(21) Anmeldenummer: 05106073.9
(22) Anmeldetag: 05.07.2005
(51) Int. Cl.: B05B 13/04, B23Q 1/54, B25J 9/16

(54) **Applikationsroboter mit einer Parallelkinematik**
Application robot comprising parallel kinematics
Robot d'application à cinématique parallèle

(30) Priorität: 09.07.2004 DE 102004033329
(43) Veröffentlichungstag der Anmeldung: 11.01.2006
(73) Patentinhaber: Dürr Systems GmbH, 70435 Stuttgart (DE)
(72) Erfinder: Meißner, Alexander, 70193, Stuttgart (DE)
(74) Vertreter: Beier, Ralph

(56) Entgegenhaltungen:
- DE-A1- 10 019 162
- DE-A1- 19 952 530
- US-A- 4 435 116
- HESSELBACH J ET AL: "PARALLELKINEMATIKEN IN DER ROBOTERTECHNIK" ZWF ZEITSCHRIFT FUR WIRTSCHAFTLICHE FERTIGUNG UND AUTOMATISIERUNG, CARL HANSER VERLAG. MUNCHEN, DE, Bd. 93, Nr. 6, Juni 1998 (1998-06), Seiten 259-262, XP000755139 ISSN: 0947-0085
- LIU K ET AL: "STEWART-PLATFORM-BASED INLET DUCT PAINTING SYSTEM" PROCEEDINGS OF THE INTERNATIONAL CONFERENCE ON ROBOTICS AND AUTOMATION ATLANTA, MAY 2 - 6, 1993, LOS ALAMITOS, IEEE COMP. SOC. PRESS, US, Bd. VOL. 1 CONF. 10, 3. Mai 1993 (1993-05-03), Seiten 106-113, XP000410173 ISBN: 0-8186-3450-2
- PROF. DR. H. MÜNCH: "Simulationen zum Thema: Parallele Roboter" ROBOTERSYSTEMTECHNIK, [Online] Seiten 1-8, XP002349396 Gefunden im Internet: URL:http://web.archive.org/web/20030203152 347/http://www.maschinenbau.hs-magdeburg.d e/personal/bargfrede/fue/parallel/ani_para llel.html> [gefunden am 2003-02-03]
- ANONYMOUS: "Custom Designs" HEXEL CORPORATION, [Online] XP002349397 Gefunden im Internet: URL:http://web.archive.org/web/20020610160 112/http://www.hexel.com/custom.htm> [gefunden am 2002-06-10]

## Beschreibung

Die Erfindung betrifft einen Applikationsroboter zur Applizierung eines Beschichtungsmittels auf ein Applikationsobjekt, insbesondere zur Lackierung von Kraftfahrzeugkarosserieteilen, gemäß dem Oberbegriff des Anspruchs 1.

In modernen Lackieranlagen zur Lackierung von Kraftfahrzeugkarosserieteilen werden bekanntermaßen mehrachsige Lackierroboter mit einer seriellen Kinematik eingesetzt, um die als Applikationsgerät verwendeten Rotationszerstäuber zu führen. Derartige Lackierroboter sind beispielsweise aus DE 100 10 615 A1 bekannt.

Nachteilig an derartigen mehrachsigen Lackierrobotern zur Führung der Applikationsgeräte ist die aufwendige Mechanik (z.B. Getriebe, Massenausgleichselement) der mehrachsigen Lackierroboter.

Ein weiterer Nachteil herkömmlicher mehrachsiger Lackierroboter ist das ungünstige Massenverhältnis zwischen der Masse des Applikationsgeräts (bei einem Rotationszerstäuber ungefähr 15 kg) und der Robotermasse von mehr als 500 kg, was unter anderem zu einem hohen Energieverbrauch bei der Bewegung der großen Robotermasse führt.

Das Dokument Hesselbach, J. et al.: "Parallelkinematiken in der Robotertechnik", ZWF Zeitschrift für wirtschaftliche Fertigung und Automatisierung, Carl Hanser Verlag, München, DE, Bd. 93, Nr. 6, Juni 1998 (1998-06), Seiten 259-262 offenbart verschiedene Parallelkinematiken und eine Kombination solcher Parallelkinematiken mit einem Handachsenkopf für Montageaufgaben und Bearbeitungsvorgänge.

Das Dokument Liu K. et al.: "Stewart-Platform-Based Inlet Duct Painting System", Proceedings of the International Conference on Robotics and Automation Atlanta, May 2-6, 1993, Los Alamitos, IEEE Comp. Soc. Press, US, Bd. Vol. 1 Conf. 10, 3. Mai 1993 (1993-05-03), Seiten 106-113 offenbart einen gattungsgemäßen Roboter für die Innenlackierung von Rohrleitungen, wobei auf einer Parallelkinematik eine drehbare Lackierdüse angebracht wird. eine Bewegung dieses Roboters in dem Rohr wird durch Verfahren der Parallelkinematik in dem Rohr erreicht.

Das Dokument US-A-4 435 116 offenbart einen Roboter mit einer Parallelkinematik, wobei auch vorgeschlagen wird, dass dieser Roboter für Lackierzwecke eingesetzt werden kann.

Das Dokument XP002349396 (URL: http://web.archive.org/web/20030203152 347/http://www.maschinenbau.hs-magdeburg.d e/personal/bargfrede/fue/parallel/ani_para llel.html) offenbart verschiedene Parallelkinematiken für Roboter, die auch in einer Ebene verfahrbar sind.

Das Dokument XP002349397 (URL: http://web.archive.org/web /20020610160112/http://www.hexel.com/custom.htm) offenbart einen Schweißroboter mit einer Parallelkinematik und einer daran angeschlossenen seriellen Kinematik zum Einsatz bei Schweißaufgaben.

Das Dokument DE 199 52 530 A1 offenbart ebenfalls einen Roboter mit einer Parallelkinematik, der über eine zusätzliche serielle Kinematik verfügt, wobei dieser Roboter für ein Bewegen eines Werkzeugs oder eines Werkstücks geeignet ist.

Der Erfindung liegt deshalb die Aufgabe zugrunde, die bekannten Applikationsroboter entsprechend zu verbessern.

Diese Aufgabe wird durch einen erfindungsgemäßen Applikationsroboter gemäß Anspruch 1 gelöst.

Die Erfindung umfasst die allgemeine technische Lehre, anstelle eines herkömmlichen mehrachsigen Lackierroboters mit einer seriellen Kinematik einen Applikationsroboter mit einer Parallelkinematik einzusetzen.

Vorteilhaft an dem erfindungsgemäßen Applikationsroboter mit einer Parallelkinematik anstelle einer herkömmlichen seriellen Kinematik sind die einfachere Mechanik, das günstigere Massenverhältnis zwischen der Robotermasse und der Masse des Applikationswerkzeugs, der geringere Energieverbrauch, die größere Absolut- und Wiederholgenauigkeit sowie die bessere mechanische Steifigkeit.

Der im Rahmen der Erfindung verwendete Begriff einer Parallelkinematik bedeutet, dass der erfindungsgemäße Applikationsroboter mehrere Antriebsachsen aufweist, die parallel auf den Endeffektor wirken, an dem das Applikationswerkzeug (z.B. eine Lackierpistole oder ein Rotationszerstäuber) befestigt werden kann. Beispielsweise kann im Rahmen der Erfindung eine Parallelkinematik verwenden werden, wie sie aus DE 100 19 162 A1 bekannt ist, so dass der Inhalt dieser Druckschrift der vorliegenden Beschreibung hinsichtlich der Gestaltung der Parallelkinematik in vollem Umfang zuzurechnen ist.

Vorzugsweise ist der Endeffektor der Parallelkinematik über mehrere kinematische Glieder mit mindestens einer Basis verbunden, wobei es sich bei den einzelnen kinematischen Gliedern beispielsweise um ausfahrbare Teleskoparme handeln kann, die beispielsweise elektrisch, pneumatisch oder hydraulisch angetrieben werden können.

In einem bevorzugten Ausführungsbeispiel wird der Endeffektor der Parallelkinematik durch drei kinematische Glieder geführt, so dass die Parallelkinematik auch als Tripod bezeichnet werden. Die Erfindung ist jedoch hinsichtlich der Anzahl der kinematischen Glieder nicht auf drei beschränkt, sondern auch mit vier oder mehr kinematischen Gliedern realisierbar.

Die Basis der kinematischen Glieder kann wahlweise ortsfest oder beweglich sein, wobei in einem bevorzugten Ausführungsbeispiel der Erfindung die Basis von sämtlichen kinematischen Gliedern beweglich ist, um den Arbeitsraum des erfindungsgemäßen Applikationsroboters zu erweitern. Hierzu besteht die Möglichkeit, dass die Basis der kinematischen Glieder an mindestens einer Verfahrschiene linear verschiebbar ist.

Darüber hinaus ist im Rahmen der Erfindung vorgesehen, dass der Applikationsroboter zur Führung des Applikationsgeräts eine Kombination aus einer Parallelkinematik und einer seriellen Kinematik aufweist.

Erfindungsgemäß kann an dem Endeffektor der Parallelkinematik ein Roboterarm drehbar und/oder schwenkbar angebracht sein.

Alternativ ist erfindungsgemäß an dem Endeffektor der Parallelkinematik oder an dem Roboterarm eine herkömmliche Roboterhandachse angebracht.

Bei der Anbringung eines Roboterarms an dem Endeffektor der Parallelkinematik ist diese vorzugsweise um eine Drehachse schwenkbar, die vorzugsweise parallel zur Längsachse der Lackierstrasse verläuft. Die Drehachse des Roboterarms verläuft also vorzugsweise parallel zur Vorschubrichtung der Applikationsobjekte in der Lackieranlage. Durch diese Ausrichtung der Drehachse des Roboterarms kann dieser eine mäanderförmige Bewegung ausführen, was bei der Lackierung vorteilhaft ist.

In einem Ausführungsbeispiel der Erfindung wird das Applikationsgerät jedoch ausschließlich durch eine Parallelkinematik geführt.

Vorteilhaft an dem erfindungsgemäßen Aufbau des Applikationsroboters ist das geringere Gewicht im Vergleich zu herkömmlichen Applikationsrobotern mit einer seriellen Kinematik. Dies ermöglicht wiederum vorteilhaft eine hängende Montage des erfindungsgemäßen Applikationsroboters innerhalb einer Lackierzelle, ohne dass die Lackierzelle dazu mechanisch wesentlich verstärkt werden muss. Der erfindungsgemäße Applikationsroboters kann also beispielsweise eine Überkopfmontage aufweisen. Es besteht jedoch auch die Möglichkeit, dass der erfindungsgemäße Applikationsroboter seitlich an einer Seitenwand der Lackierzelle befestigt ist. Darüber hinaus ist auch eine herkömmliche Bodenmontage des erfindungsgemäßen Applikationsroboters möglich.

Der erfindungsgemäße Applikationsroboter weist vorzugsweise eine Masse auf, die wesentlich kleiner als 500 kg ist, was in der Größenordnung der Masse herkömmlicher Applikationsroboter mit einer seriellen Kinematik liegt. Beispielsweise kann die Masse des erfindungsgemäßen Applikationsroboters kleiner als 400 kg, 300 kg, 200 kg, 100 kg oder sogar kleiner als 50 kg sein.

Der im Rahmen der Erfindung verwendete Begriff eines Applikationsroboters ist nicht auf Lackierroboter zur Lackierung von Kraftfahrzeugkarosserieteilen beschränkt, sondern umfasst auch andere Roboter, bei denen ein Applikationsmittel (z.B. Grundierung, Füller, Basislack, Klarlack, Transportwachs) auf ein Applikationsobjekt aufgetragen wird.

Darüber hinaus ist die Erfindung nicht auf einen einzelnen Applikationsroboter beschränkt, sondern umfasst auch eine Lackierzelle mit einer mindestens teilweise geschlossenen Lackierkabine und mindestens einem erfindungsgemäßen Applikationsroboter, wie er vorstehend beschrieben wurde.

Ferner umfasst die Erfindung auch eine vollständige Beschichtungsanlage mit einem erfindungsgemäßen Applikationsroboter und die neuartige Verwendung eines Roboters mit einer Parallelkinematik als Applikationsroboter in einer Beschichtungsanlage.

Andere vorteilhafte Weiterbildungen der Erfindung sind in den Unteransprüchen gekennzeichnet oder werden nachstehend zusammen mit der Beschreibung des bevorzugten Ausführungsbeispiels anhand der Figuren näher erläutert. Es zeigen:
- Figur 1: eine schematisierte Frontansicht einer Lackieranlage mit zwei nicht erfindungsgemäßen Lackierrobotern,
- Figur 2: eine Seitenansicht der Lackieranlage aus Figur 1,
- Figur 3: ein Ausführungsbeispiel eines erfindungsgemäßen Lackierroboters mit einer Kombination einer Parallelkinematik mit einer seriellen Kinematik,
- Figur 4: eine schematisierte Frontansicht eines anderen Ausführungsbeispiels einer erfindungsgemäßen Lackieranlage mit zwei Lackierrobotern sowie
- Figur 5: eine Seitenansicht der Lackieranlage aus Figur 4.

Die Zeichnungen zeigen in stark vereinfachter Form eine Lackierzelle 1 einer Lackieranlage zur Lackierung von Kraftfahrzeugkarosserieteilen, wobei zur Vereinfachung nur eine Kraftfahrzeugkarosserie 2 schematisch dargestellt ist.

Die Lackierzelle 1 wird hierbei durch eine Lackierkabine 3 begrenzt, wobei in der Lackierzelle 1 an der Innenwand der Lackierkabine 3 oben und an der Seitenwand jeweils ein Lackierroboter 4, 5 angebracht ist.

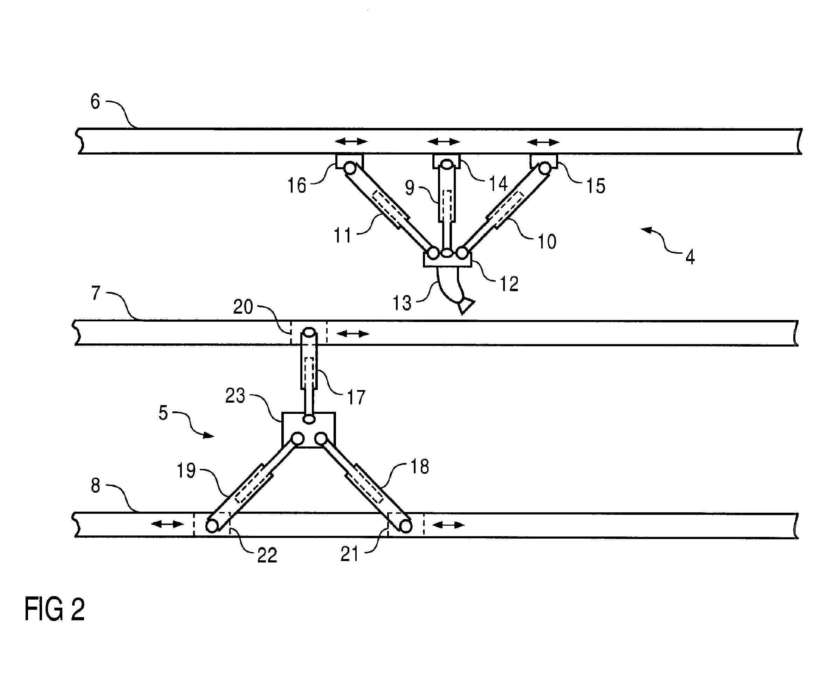

Aus der Seitenansicht in Figur 2 ist weiterhin ersichtlich, dass die Lackieranlage mehrere Linearführungen 6, 7, 8 in Form von Verfahrschienen aufweist, entlang derer die beiden Lackierroboter 4, 5 in Längsrichtung der Lackierstraße verschoben werden können.

Der Lackierroboter 4 weist als kinematische Glieder mehrere ausfahrbare Teleskoparme 9, 10, 11 auf, die beispielsweise elektrisch, pneumatisch oder hydraulisch angetrieben werden können und einen Endeffektor 12 führen, an dem ein Rotationszerstäuber 13 angebracht ist.

Kabinenseitig stützen sich die Teleskoparme 9-11 an jeweils einer Basis 14, 15 bzw. 16 ab, wobei die Basen 14-16 entlang der Linearführung 6 verschiebbar sind, wie aus Figur 2 ersichtlich ist.

Auf diese Weise kann der Lackierroboter 4 in Längsrichtung der Linearführung 6 verschoben werden. Durch eine geeignete Ansteuerung der einzelnen Teleskoparme 9-11 kann der Endeffektor 12 innerhalb des Arbeitsraums des Lackierroboters 4 weitgehend frei positioniert werden, was eine entsprechend freie Führung des Rotationszerstäubers 13 um die Kraftfahrzeugkarosserie 2 ermöglicht.

Der an der Seite der Lackierkabine 3 angebrachte Lackierroboter 5 weist ebenfalls mehrere ausfahrbare Teleskoparme 17, 18, 19 auf, die elektrisch, pneumatisch oder hydraulisch angetrieben werden können und die sich kabinenseitig an jeweils einer Basis 20, 21, 22 abstützen.

Die Basis 20 ist hierbei verschiebbar in der Linearführung 7 geführt, während die beiden Basen 21, 22 verschiebbar in der unteren Linearführung 8 geführt werden. Durch eine entsprechende Verschiebung der Basen 20-22 kann also der gesamte Lackierroboter 5 in Längsrichtung der Lackierstraße verschoben werden.

An ihrem anderen Ende tragen die Teleskoparme 17-19 einen weiteren Endeffektor 23, an dem ebenfalls ein Rotationszerstäuber 24 angebracht ist.

Die beiden Lackierroboter 4, 5 weisen also jeweils eine Parallelkinematik zur Führung des Endeffektors 12 bzw. 23 auf, was im Vergleich zu herkömmlichen mehrachsigen Lackierrobotern zu einem günstigeren Massenverhältnis zwischen der Masse des Applikationsgerätes und der Robotermasse führt.

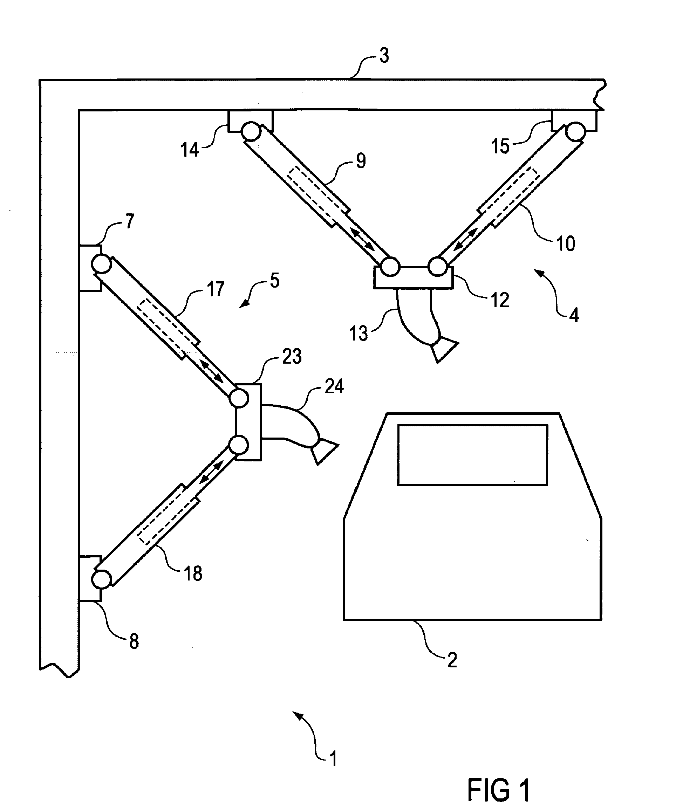

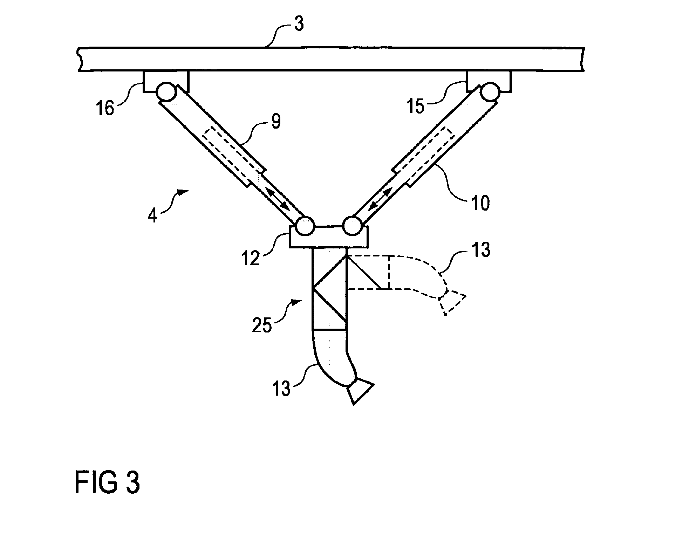

Das in Figur 3 dargestellte Ausführungsbeispiel eines Lackierroboters 4 stimmt weitgehend mit dem in Figur 1 gezeigten Lackierroboter 4 überein, so dass zur Vermeidung von Wiederholungen weitgehend auf die vorstehende Beschreibung zu Figur 1 verwiesen wird, wobei für entsprechende Bauteile dieselben Bezugszeichen wie in Figur 1 verwendet werden.

Eine Besonderheit dieses Ausführungsbeispiels besteht darin, dass der Rotationszerstäuber 13 nicht direkt an dem Endeffektor 12 angebracht ist.

Stattdessen ist an dem Endeffektor 12 eine Roboterhandachse 25 mit einer seriellen Kinematik angebracht, wobei die Roboterhandachse 25 den Rotationszerstäuber 13 hochbeweglich führt. Die Roboterhandachse 25 kann weitgehend herkömmlich ausgebildet sein, so dass hinsichtlich des Aufbaus und der Funktionsweise der Roboterhandachse 25 auf den einschlägigen Stand der Technik verwiesen wird. Die mechanische Ansteuerung der Roboterhandachse 25 ist hierbei jedoch zur Vereinfachung nicht dargestellt.

Dieses Ausführungsbeispiel des Lackierroboters 4 zeichnet sich also durch die Kombination einer Parallelkinematik mit einer seriellen Kinematik der Roboterhandachse 25 aus.

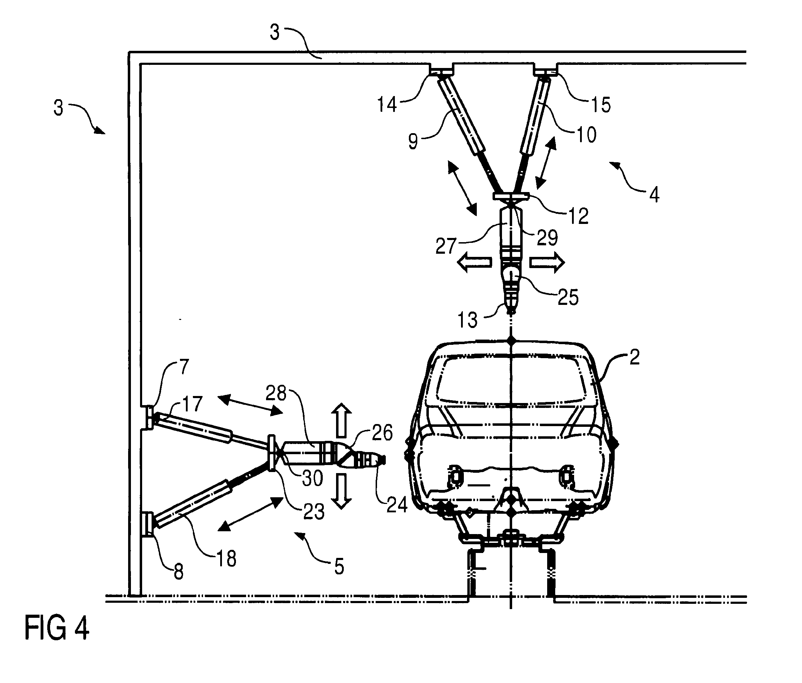

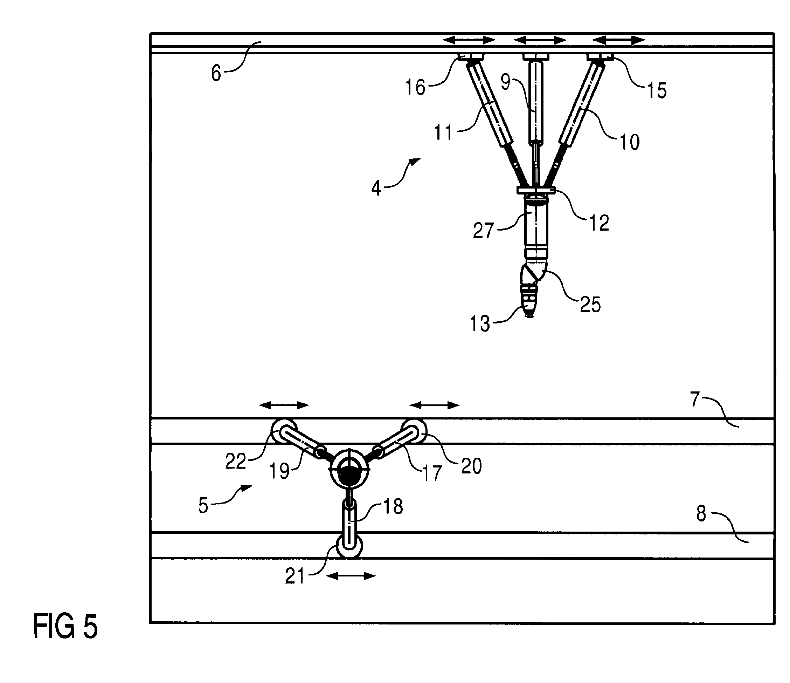

Die nachfolgend beschriebene und in den Figuren 4 und 5 dargestellte Lackieranlage stimmt weitgehend mit den vorstehend beschriebenen Lackieranlagen überein, so dass zur Vermeidung von Wiederholungen weitgehend auf die vorstehende Beschreibung verwiesen wird, wobei für entsprechende Bauteile dieselben Bezugszeichen verwendet werden.

Eine Besonderheit dieses Ausführungsbeispiels besteht darin, dass die Roboterhandachse 25 bzw. 26 nicht direkt an dem Endeffektor 12 bzw. 23 angebracht ist. Stattdessen ist zwischen dem Endeffektor 12 bzw. 23 und der Roboterhandachse 25 bzw. 26 ein Roboterarm 27 bzw. 28 angeordnet, wobei der Roboterarm 27 um eine Schwenkachse 29 schwenkbar ist, während der Roboterarm 28 um eine Schwenkachse 30 schwenkbar ist. Die beiden Schwenkachsen 29, 30 verlaufen hierbei parallel zur Längsachse der Lackierstrasse, so dass der Lackierroboter 5 an der Seite der Lackierstraße eine mäanderförmige Bewegung ausführen kann, was für die Lackierung vorteilhaft ist.

### Bezugszeichenliste:

- 1: Lackierzelle
- 2: Kraftfahrzeugkarosserie
- 3: Lackierkabine
- 4, 5: Lackierroboter
- 6-8: Linearführungen
- 9-11: Teleskoparme
- 12: Endeffektor
- 13: Rotationszerstäuber
- 14-16: Basis
- 17-19: Teleskoparme
- 20-22: Basis
- 23: Endeffektor
- 24: Rotationszerstäuber
- 25: Roboterhandachse
- 26: Roboterhandachse
- 27: Roboterarm
- 28: Roboterarm
- 29: Schwenkachse
- 30: Schwenkachse

## Patentansprüche

1. Applikationsroboter (4, 5) zur Applizierung eines Beschichtungsmittels auf ein Applikationsobjekt mit
- einem Endeffektor (12, 23) zur Führung eines Applikationswerkzeugs (13, 24),
- einer Parallelkinematik zur mechanischen Führung des Endeffektors (12, 23) mit dem Applikationswerkzeug (13, 24) und
- einer Kombination der Parallelkinematik mit mindestens einer zusätzlichen seriellen Kinematik zur Führung des Applikationswerkzeugs (13, 24),
**dadurch gekennzeichnet, dass**
- der Applikationsroboter zur Lackierung von Kraftfahrzeugkarosserieteilen (2) geeignet ist, und
- an dem Endeffektor (12, 13) der Parallelkinematik ein das Applikationswerkzeug (13, 24) führender Roboterarm (27, 28) schwenkbar und/oder drehbar angebracht ist und/oder eine Roboterhandachse (25, 26) angebracht ist.

2. Applikationsroboter (4, 5) nach Anspruch 1, **dadurch gekennzeichnet, dass** der Endeffektor (12, 23) der Parallelkinematik über mehrere kinematische Glieder (9-11, 17-19) mit mindestens einer Basis (14-16, 20-22) verbunden ist.

3. Applikationsroboter (4, 5) nach Anspruch 2, **dadurch gekennzeichnet, dass** die kinematischen Glieder (9-11, 17-19) der Parallelkinematik ausfahrbare Teleskoparme sind, die elektrisch, pneumatisch oder hydraulisch angetrieben sind.

4. Applikationsroboter (4, 5) nach Anspruch 2 oder 3, **dadurch gekennzeichnet, dass** die Basis (14-16, 20-22) der kinematischen Glieder (9-11, 17-19) beweglich ist.

5. Applikationsroboter (4, 5) nach Anspruch 4, **dadurch gekennzeichnet, dass** die Basis (14-16, 20-22) der kinematischen Glieder (9-11, 17-19) an mindestens einer Linearführung (6-8) linear verschiebbar ist.

6. Applikationsroboter (4, 5) nach einem der vorhergehenden Ansprüche, **dadurch gekennzeichnet, dass** das Applikationswerkzeug (13, 24) eine Lackierpistole oder eine Rotationszerstäuber ist.

7. Applikationsroboter (4, 5) nach einem der vorhergehenden Ansprüche, **dadurch gekennzeichnet, dass** an dem Roboterarm (27, 28) die Roboterhandachse (25, 26) angebracht ist.

8. Applikationsroboter (4, 5) nach einem der vorhergehenden Ansprüche, **dadurch gekennzeichnet, dass** der Roboterarm (27, 28) um eine Drehachse (29, 30) drehbar ist, die im Wesentlichen parallel zur Vorschubrichtung des Applikationsobjekts (2) verläuft.

9. Applikationsroboter (4, 5) nach einem der vorhergehenden Ansprüche, **gekennzeichnet durch** eine hängende Überkopfmontage oder eine Seitenwandmontage.

10. Lackierzelle mit einer mindestens teilweise geschlossenen Lackierkabine (3) und mindestens einem Applikationsroboter (4, 5) nach einem der vorhergehenden Ansprüche.

11. Beschichtungsanlage mit mindestens einem Applikationsroboter (4, 5) nach einem Ansprüche 1 bis 9.

12. Verwendung eines Applikationsroboters (4, 5) nach einem der Ansprüche 1 bis 9 in einer Beschichtungsanlage.

## Claims

1. An application robot (4,5) for applying a coating agent to an application object including
- an end effector (12,23) for guiding an application tool (13,24),
- a parallel kinematic for mechanically guiding the end effector (12,23) with the application tool (13,24), and
- a combination of the parallel kinematic with at least one additional serial kinematic for guiding the application tool (13,24),
**characterised in that**
- the application robot is suitable for painting motor vehicle body parts (2), and
- a robot arm (27,28), which guides the application tool (13,24), is pivotally and/or rotatably attached to the end effector (12,13) of the parallel kinematic and/or a robot wrist (25,26) is attached.

2. An application robot (4,5) as claimed in claim 1, **characterised in that** the end effector (12,13) of the parallel kinematic is connected to at least one base (14-16,20-22) by means of a number of kinematic elements (9-11,17-19).

3. An application robot (4,5) as claimed in claim 2, **characterised in that** the kinematic elements (9-11,17-19) of the parallel kinematic are extendable telescopic arms, which are electrically, pneumatically or hydraulically operated.

4. An application robot (4,5) as claimed in claim 2 or 3, **characterised in that** the base (14-16,20-22) of the kinematic elements (9-11,17-19) is movable.

5. An application robot (4,5) as claimed in claim 4, **characterised in that** the base (14-16,20-22) of the kinematic elements (9-11, 17-19) is linearly moveable on at least one linear guide (6-8).

6. An application robot (4,5) as claimed in one of the preceding claims, **characterised in that** the application tool (13,24) is a painting gun or a rotary atomiser.

7. An application robot (4,5) as claimed in one of the preceding claims, **characterised in that** the robot wrist (25,26) is attached to the robot arm (27,28).

8. An application robot (4,5) as claimed in one of the preceding claims, **characterised in that** the robot arm (27,28) is rotatable about a rotary shaft (29,30), which extends substantially parallel to the direction of advance of the application object (2).

9. An application robot (4,5) as claimed in one of the preceding claims, **characterised by** a suspended overhead mounting or a side wall mounting.

10. A painting enclosure with at least one partially closed painting booth (3) and at least one application robot (4,5) as claimed in one of the preceding claims.

11. A coating installation with at least one application robot (4,5) as claimed in one of claims 1 to 9.

12. Use of an application robot (4,5) as claimed in one of claims 1 to 9, in a coating installation.

## Revendications

1. Robot d'application (4, 5) pour l'application d'un agent de revêtement sur un objet d'application comprenant
- un effecteur final (12, 23) pour le guidage d'un outil application (13, 24),
- une cinématique parallèle pour le guidage mécanique de l'effecteur final (12, 23) avec l'outil d'application (13, 24), et
- une combinaison de la cinématique parallèle avec au moins une cinématique série supplémentaire pour le guidage de l'outil d'application (13, 24),
**caractérisé en ce que**
- le robot d'application convient pour le laquage de parties de carrosseries automobiles (2), et
- un bras de robot (27, 28) guidant l'outil d'application (13, 24) est placé de façon pivotante et/ou rotative et/ou un axe de main de robot (25, 26) est placé sur l'effecteur final (12, 13) de la cinématique parallèle.

2. Robot d'application (4, 5) selon la revendication 1, **caractérisé en ce que** l'effecteur final (12, 23) de la cinématique parallèle est relié par plusieurs éléments (9-11, 17-19) cinématiques à au moins une base (14-16, 20-22).

3. Robot d'application (4, 5) selon la revendication 2, **caractérisé en ce que** les éléments (9-11, 17-19) cinématiques de la cinématique parallèle sont des bras télescopiques déployables, qui sont entraînés de façon électrique, pneumatique ou hydraulique.

4. Robot d'application (4, 5) selon la revendication 2 ou 3, **caractérisé en ce que** la base (14-16, 20-22) des éléments (9-11, 17-19) cinématiques est mobile.

5. Robot d'application (4, 5) selon la revendication 4, **caractérisé en ce que** la base (14-16, 20-22) des éléments (9-11, 17-19) cinématiques peut coulisser linéairement sur au moins un guide linéaire (6-8).

6. Robot d'application (4, 5) selon l'une quelconque des revendications précédentes, **caractérisé en ce que** l'outil d'application (13, 24) est un pistolet de laquage ou un pulvérisateur à rotation.

7. Robot d'application (4, 5) selon l'une quelconque des revendications précédentes, **caractérisé en ce que** l'axe de la main de robot (25, 26) est placé sur le bras de robot (27, 28).

8. Robot d'application (4, 5) selon l'une quelconque des revendications précédentes, **caractérisé en ce que** le bras de robot (27, 28) peut tourner autour d'un axe de rotation (29, 30), qui est agencé sensiblement parallèlement à la direction d'avancement de l'objet d'application (2).

9. Robot d'application (4, 5) selon l'une quelconque des revendications précédentes, **caractérisé par** un montage suspendu au-dessus de la tête ou un montage sur paroi latérale.

10. Cellule de laquage comprenant une cabine de laquage (3) au moins en partie fermée et au moins un robot d'application (4, 5) selon l'une quelconque des revendications précédentes.

11. Installation de revêtement comprenant au moins un robot d'application (4, 5) selon l'une quelconque des revendications 1 à 9.

12. Utilisation d'un robot d'application (4, 5) selon l'une quelconque des revendications 1 à 9 dans une installation de revêtement.
